# EUROPÄISCHE PATENTANMELDUNG

(11) **EP 0 886 076 A2**
(43) Veröffentlichungstag der Anmeldung: **23.12.1998**
(21) Anmeldenummer: 98110259.3
(22) Anmeldetag: 05.06.1998
(51) Int. Cl.: F16D 65/16

(54) **Antrieb für eine elektrisch betätigbare Fahrzeugbremse**

(30) Priorität: 16.06.1997 DE 19725372; 23.02.1998 DE 19807432
(71) Anmelder: Deutsches Zentrum für Luft- und Raumfahrt e.V., 53175 Bonn (DE)
(72) Erfinder: Dietrich, Johannes, 82205 Gilching (DE); Gombert, Bernd, 82284 Grafrath (DE); Grebenstein, Markus, 81541 München (DE)
(74) Vertreter: von Kirschbaum, Albrecht, Dipl.-Ing.

(57) **Zusammenfassung**

Als Antrieb für eine elektrisch betätigbare Fahrzeugbremse, deren Reibelemente mit Hilfe eines Elektromotors (4) an eine Bremsscheibe (38) anpreßbar sind, ist der Elektromotor (4) über ein in Verschieberichtung der Reibelemente wirkendes Spindelgetriebe mit Axialführung und Verdrehsicherung mit einem auf die Reibelemente einwirkenden, axial verschiebbar gelagerten Bremskolben (24) verbunden. Als Spindelgetriebe ist eine an sich bekannte steigungstreue Planeten-Wälz-Gewinde-(SPWG-)Spindel (12) verwendet, welche aus einer Spindelstange (16), einer diese umgebenden Spindelmutter (14) und einer Anzahl dazwischen angeordneter Wälz- oder Rollkörper (28) mit zum Gewinde (17) der Spindelstange (16) passenden Rillenprofilen (29), besteht. Hierbei sind die Wälz- oder Rollkörper (28) über eine Anzahl Führungsringe (30) oder über einen Führungskörper (30') und über dazwischen angeordnete Lager (18,20) gelagert. Ferner sind die Wälz- oder Rollkörper (28) relativ zur Spindelmutter (14) und zueinander in einem fest vorgegebenen Abstand angeordnet.

## Beschreibung

Die Erfindung betrifft einen Antrieb für eine elektrisch betätigbare Fahrzeugbremse nach dem Oberbegriff eines der Ansprüche 1, 8 oder 9.

In DE 195 43 098 C2 ist eine elektrisch betätigbare Fahrzeugbremse beschrieben. Bei dieser bekannten Bremsanlage ist die elektrisch betätigbare Fahrzeugbremse als Scheibenbremse ausgebildet, deren Bremsbacken mit Hilfe eines als elektrischer Antrieb dienenden Elektromotors an die Bremsscheibe anpreßbar sind. Ferner ist der Elektromotor über ein in Verschieberichtung der Reibelemente angeordnetes Spindelgetriebe in Form einer aus DE 37 39 059 bekannten Planeten-Wälz-Gewinde-Spindel mit einem auf die Bremsbacke einwirkenden, axial verschiebbar gelagerten Kolben verbunden.

Diese bekannte Planeten-Wälz-Gewinde-Spindel weist geringe Reibwerte auf und ermöglicht eine verhältnismäßig hohe Kraftübersetzung, so daß im allgemeinen die zum Betätigen von Fahrzeugbremsen erforderliche Kraft in nur einer Getriebestufe erreicht werden kann. Aufgrund ihres Funktionsprinzips ist bei diesem Spindelgetriebe jedoch nachteilig, daß die Übertragung der Tangentialkräfte von Spindelstange auf Wälz- oder Rollkörper und von diesen auf die Spindelmutter schlupfbehaftet ist. Somit hat die bekannte Planeten-Wälz-Gewinde-Spindel eine nicht genau definierte Steigung und folglich auch keine konstante Kraftübersetzung.

Für den Betrieb einer Bremse muß jedoch die Kraft, mit welcher Bremsbacken an eine Bremsscheibe gepreßt werden, bekannt sein. Wird ein solches, nicht steigungstreues Spindelgetriebe verwendet, so kann weder die Position noch die Geschwindigkeit, noch die auf den Bremsbelag wirkende Kraft aus den Motorparametern, wie Strom, Drehmoment, Drehzahl und Motorstellung, ermittelt werden.

Um solche für eine Steuerung/Regelung notwendigen Größen zu ermitteln, werden folglich zusätzliche Sensoren und Auswerteeinheiten benötigt, die zum einen teuer sind und zum anderen einen zusätzlichen technischen Aufwand bedeuten. Außerdem benötigen die Sensoren im bremsscheibennahen Bereich Bauraum, der dort stark eingeengt ist. Ferner treten aufgrund der Nähe zur Bremsscheibe hohe Temperaturen auf. Die Sensoren müßten demzufolge hitzebeständig und frei von einer Temperaturdrift sein oder aber thermisch abgeschirmt werden. Dies ist jedoch nur mit hohem technischen und finanziellen Aufwand zu erreichen.

Ferner gibt es bereits einige getriebetechnische Lösungsvorschläge zum Aufbau eines kompakten, elektrisch betätigbaren Bremsaktors. Mit keinem der bis jetzt bekannt gewordenen Lösungsansätze ist es bisher gelungen, aus der Drehbewegung des Antriebsmotors in Form eines Elektromotors zum Betätigen einer Bremse erforderliche, besonders hohe Kräfte zu erzeugen.

Gemäß der Erfindung sollen daher unter Verwenden eines Spindelantriebs als Direktantrieb, d.h. ohne eine zusätzliche dazwischen geschaltete Getriebestufe, oder aber eines Spindelantriebs mit einem vorgeschalteten Getriebe niedriger Übersetzung entweder zum Zuspannen einer Bremse erforderliche Kräfte mit einer exakt definierten Steigung oder besonders hohe Kräfte zum Zuspannen einer Bremse mit einer weniger exakten Steigung erzeugt werden.

Gemäß der Erfindung ist, wenn zum Zuspannen einer Bremse erforderliche Kräfte mit einer exakt definierten Steigung erzeugt werden sollen, ein Antrieb für eine elektrisch betätigbare Fahrzeugbremse mit den Merkmalen im kennzeichnenden Teil des Anspruchs 1 zu verwenden, oder, wenn sehr hohe Kräfte zum Zuspannen einer Bremse erzeugt werden müssen, ist ein Antrieb für eine elektrisch betätigbare Fahrzeugbremse mit den Merkmalen im kennzeichnenden Teil einer der Ansprüche 8 oder 9 einzusetzen. Vorteilhafte Weiterbildungen der Erfindung sind Gegenstand von auf einen der Ansprüche 1, 8 oder 9 unmittelbar oder mittelbar rückbezogenen Ansprüchen.

Die erfindungsgemäße Verwendung einer aus DE 195 40 634 C1 bekannten steigungstreuen Planeten-Wälz-Getriebe-Spindel (die nachstehend der Einfachheit halber häufig als SPWG-Spindel bezeichnet ist), um eine schnelle Drehbewegung eines Elektromotors bei niedrigem Drehmoment in eine Axialbewegung mit der benötigten Kraft auf einen Reibbelag einer Fahrzeugbremse umzuwandeln, ermöglicht eine Kraftübersetzung in einer oder zwei Getriebestufen bei konstanter Steigung und somit einen Rückschluß auf Größen, wie Kraft, Position und Beschleunigung am Reibbelag aus den bekannten bzw. meßbaren Größen des Motors bzw. motorisch bewegten Teilen des Spindelgetriebes, wie Strom, Schrittweite, Winkelposition, Winkelgeschwindigkeit, Winkelbeschleunigung, Drehmoment u.ä.

Durch die erfindungsgemäße Verwendung der aus DE 195 40 634 C1 bekannten Getriebetechnik der steigungstreuen Planeten-Wälz-Gewinde-Spindeln kann die Zuspannkraft von einem Elektromotor auf einen Reibbelag eines Bremsaktors einer elektrisch betätigbaren Fahrzeugbremse steigungsgetreu und somit ohne Schlupf übertragen werden.

Zum Betätigen der Bremse wird ein kompakter Elektromotor eingesetzt, der geringes Gewicht und kleines Bauvolumen aufweist und somit unmittelbar an der Radbremse vorgesehen werden kann. Gemäß einer bevorzugten Ausführungsform ist der Läufer des Motors mit der Spindelmutter der SPWG-Spindel drehfest verbunden. Hierbei ist die Spindelstange verdrehgesichert und ihrerseits direkt mit dem Betätigungskolben der Bremse verbunden, welcher den Reibbelag gegen die Bremsscheibe preßt.

Durch Einsatz der SPWG-Spindel lassen sich sehr kleine Systemsteigerungen bei gleichzeitiger Steigungstreue realisieren, was mit anderen Spindeltypen prinzipbedingt nicht realisierbar ist. So lassen sich beispielsweise Steigungen im Bereich von 0,2mm steigungstreu realisieren. Somit kann mit einer einzigen Übersetzungsstufe das begrenzte Drehmoment des Antriebsmotors steigungstreu in ausreichende Längskräfte zum Zuspannen der Bremse umgewandelt werden.

Um den Gesamtwirkungsgrad des Getriebes zu erhöhen und um die Verlustleistung sowie die Losbrechmomente/Reibmomente der Lager zu verringern, ist es vorteilhaft und sinnvoll, ein niedrig übersetzendes einstufiges Getriebe mit geringem Gewicht, jedoch mit hohem Wirkungsgrad und kompakter Bauweise zwischen dem Antriebsmotor und dem Spindelgetriebe vorzusehen.

Bei einer weiteren vorteilhaften Ausgestaltung der Erfindung ist der Elektromotor drehfest mit der Spindelstange der SPWG-Spindel verbunden, wobei deren Spindelmutter auf den Bremskolben wirkt. Bei dieser Ausführungsform der Erfindung ist der Innendurchmesser des Läufers des Elektromotors so bemessen, daß in dem Läufer die Spindelstange untergebracht werden kann und somit eine Nachstellbewegung ermöglicht ist. Durch diese vorteilhafte Ausgestaltung der Erfindung ist obendrein die Baulänge des Bremsaktors reduziert, da die Spindelstange innerhalb des Rotors/Läufers angeordnet ist.

Gemäß noch einer weiteren bevorzugten Ausgestaltung der Erfindung ist der Innendurchmesser des Rotors des Elektromotors so bemessen, daß er die Spindelmutter einer SPWG-Spindel aufnehmen kann, welche drehfest mit dem Rotor verbunden ist. Bei dieser Ausführungsform wirkt dann die Spindelstange auf den Bremskolben. Auch bei dieser Ausführungsform ist die Baulänge des Bremsaktors reduziert.

Gemäß noch einer weiteren Ausführungsform der Erfindung kann der Läufer des Elektromotors drehfest mit einem Getriebe verbunden sein, dessen Abtriebswelle wiederum die Spindelstange der SPWG-Spindel ist. Auch in dieser Ausführungsform wirkt dann deren Spindelmutter auf den Bremskolben, wodurch insgesamt der Wirkungsgrad des Bremsaktors erhöht werden kann.

Der erfindungsgemäße Antrieb weist somit eine besonders kompakte und leichte Bauweise auf und hat insbesondere ein festes Übertragungsverhältnis. Obendrein besteht der erfindungsgemäße Antrieb nur aus wenigen Bauteilen und läßt in vorteilhafter Weise eine Bestückung mit gegebenenfalls erforderlicher Sensorik zu. Schließlich besitzt der erfindungsgemäße Antrieb aufgrund der geringen, in ihm auftretenden Reibungsverluste einen hohen Wirkungsgrad.

Die erfindungsgemäße Verwendung eines aus DE 27 18 888 C2 bekannten Schraubspindelantriebs, um eine schnelle Drehbewegung eines Elektromotors bei niedrigem Drehmoment in eine Axialbewegung umzuwandeln, ermöglicht es, eine besonders hohe Kraft auf einen Reibbelag einer Fahrzeugbremse in einer Getriebestufe oder in einer Getriebestufe mit vorgeschaltetem Getriebe niedriger Übersetzung aufzubringen.

Mit dem aus DE 27 18 888 C2 bekannten Spindeltrieb kann aufgrund der Tatsache, daß zwischen Planetenrollen und einer Spindelmutter die Kraft über die gleichen Rillenprofilierungen übertragen wird, wie die zwischen den Planetenrollen und dessen Spindelstange wirkenden Kraft eine besonders hohe Tragfähigkeit im Vergleich zu anderen Spindelgetrieben erreichbar ist. Obendrein wird, wenn dem aus DE 27 18 888 C2 bekannten Spindeltrieb ein Getriebe niedriger Übersetzung vorgeschaltet wird, keine nennenswerte zusätzliche Baulänge für die dadurch geschaffene Kraftübertragung benötigt.

Nachfolgend wird die Erfindung anhand von bevorzugten Ausführungsbeispielen unter Bezugnahme auf die anliegenden Zeichnungen im einzelnen erläutert. Es zeigen:
- Fig.1a: eine teilsweise aufgeschnittene steigungstreue Planeten-Wälz-Gewinde-(SPWG-)Spindel;
- Fig.1b: eine Modifizierung der teilweise aufgeschnittenen Planeten-Wälz-Gewinde-(SPWG-)Spindel von Fig.1a;
- Fig.2: in perspektivischer Darstellung einen teilweise aufgeschnittenen Bremsaktor mit einem Antrieb und einer SPWG-Spindel nach Fig.1a oder 1b, gemäß der Erfindung;
- Fig.3: in perspektivischer Darstellung eine teilweise aufgeschnittene, erste alternative Ausführungsform des erfindungsgemäßen Antriebs eines Bremsaktors;
- Fig.4: in perspektivischer Darstellung eine teilweise aufgeschnittene, zweite alternative Ausführungsform des erfindungsgemäßen Antriebs eines Bremsaktors;
- Fig.5: in perspektivischer Darstellung eine teilweise aufgeschnittene, dritte alternative Ausführungsform des erfindungsgemäßen Antriebs eines Bremsaktors;
- Fig.6: in perspektivischer Darstellung eine teilweise aufgeschnittene, vierte alternative Ausführungsform des erfindungsgemäßen Antriebs eines Bremsaktors;
- Fig.7: ein Diagramm zur Veranschaulichung einer Wirkungsgradverbesserung bei Einsatz eines Getriebes nach Fig.2;
- Fig.8: in Seitenansicht und teilweise im Längsschnitt einen Schraubspindelantrieb, und
- Fig.9: eine Endansicht oder eine Draufsicht des Schraubspindelantriebs nach Fig.8.

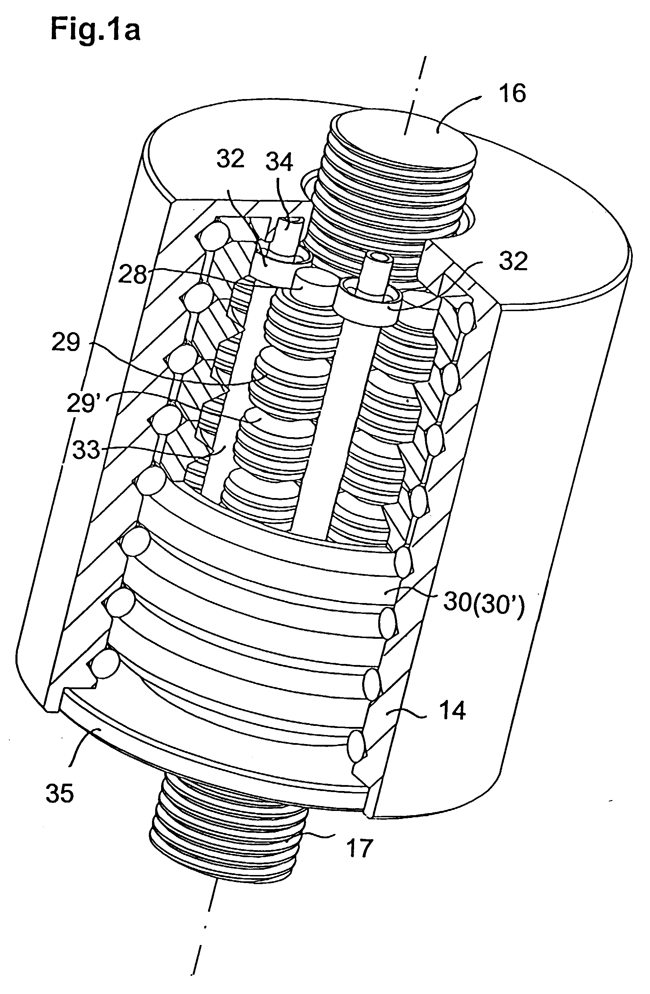

Die SPWG-Spindel 12 weist in der Ausführungsform der Fig.1a im Gegensatz zu an sich bekannten Bewegungsschrauben aus eine Spindelstange 16 auf, die mit einem ein- oder mehrgängigen Feingewinde versehen und von einer Anzahl walzenförmiger Rollkörper 28 umgeben ist. Die Rollkörper 28 sind in beliebiger Anzahl und in gleichmäßigen bzw. ungleichmäßigen Abständen planetenartig angeordnet. In der in Fig.1a wiedergegebenen SPWG-Spindel 12 sind beispielsweise acht Rollkörper 28 vorgesehen. Die Roll- oder Wälzkörper 28 weisen eine dem Feingewinde 17 der Spindelstange 16 entsprechende Rillenprofilierung auf.

Eine in die Spindelstange 16 eingeleitete Kraft wird von dem ein- oder mehrgängigen Spindelstangen-Feingewinde 17 auf abschnittsweise ausgebildete Rillenprofile 29 der Anzahl Roll- oder Wälzkörper 28 übertragen.

Über in den Roll- oder Wälzkörpern 28 vorgesehene, im Querschnitt V-förmig ausgeführte Führungsrillen 29' mit balligen oder geraden Flanken wird die Kraft mittels Gleitkontakt auf eine Anzahl Führungsringe 30 oder einen Führungskörper 30' mit ringförmig umlaufenden Führunsgrillen 31' übertragen. Die Führungsringe 30 bzw. der Führungskörper 30' sind in der Spindelmutter 14 durch Kugel- oder Rollenlagerringe gelagert, so daß zwischen den Führungsringen 30 bzw. dem Führungskörper 30' und der Spindelmutter 14 keine in Umfangsrichtung auftretenden Kräfte bzw. Drehmomente übertragen werden können.

Zur Kontaktlagerung der Roll- oder Wälzkörper 28 und um den Abstand der Roll- oder Wälzkörper 28 zueinander konstant zu halten, sind Kugel oder Rollenlager 32 vorgesehen. Die Kugel- oder Rollenlager 32 sind über Zapfen 33 und Buchsen 34 direkt in der Spindelmutter 14 gehalten und die den Kugel oder Rollenlagern 32 gegenüberliegeneden Kugel- oder Rollenlager 32' sind über Zapfen und Buchsen in der Spindelabdeckung 35 gehalten.

Aufgrund des Vorsehens der vorstehend beschriebenen Führungsringe 30 bzw. des Führungskörpers 30' sowie der Kugel- oder Rollenlager 32 und 32' kann zwischen dem Feingewinde 17 der Spindelstange 16 und den Führungsrillen 29' der Roll- oder Wälzkörper 28 kein Schlupf auftreten. Ebenso sind durch Schlupf bedingte oder aus anderen Gründen auftretende Steigungsfehler ausgeschlossen.

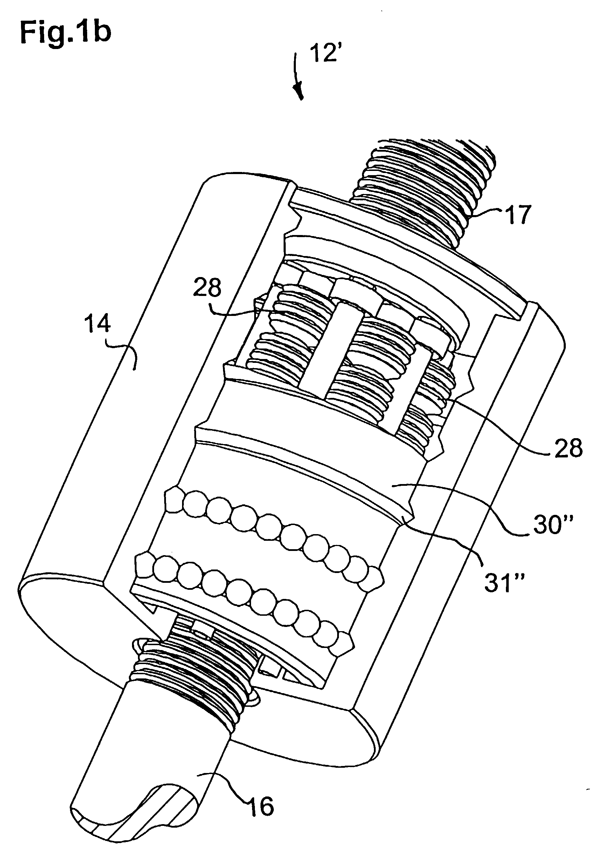

In Fig.1b ist eine Modifizierung der in Fig.1a wiedergegebenen, teilweise aufgeschnittenen steigungstreuen Planeten-Wälz-Gewinde-(SPWG-)Spindel 12' dargestellt, bei welcher im Unterschied zu der Ausführungsform in Fig.1a in einem Führungskörper 30'' eine schraubenlinienförmige Führungsrille 31'' ausgebildet ist. Hierbei sind in Fig.1b in dem obersten Abschnitt der schraubenlinienförmigen Führungsrille 31'' zur Verdeutlichung keine Kugeln wie in den darunterliegenden beiden Abschnitten der schraubenlinienförmigen Führungsrille 31' eingetragen. Abgesehen von dem unterschiedlichen Verlauf der schraubenlinienförmigen Führungsrille 31'' im Unterschied zu den kreisförmig umlaufenden Führungsrillen 31' in Fig.1a ist die Ausführung der SPWG-Spindel 12' identisch mit derjenigen der SPWG-Spindel 12 in Fig.1a und ein nach dem Kugel- oder Wälzkörper-Umlaufprinzip arbeitendes Spindelgetriebe geschaffen, das gleichzeitig als Lager dient.

Bei der Ausführungsform der SPWG-Spindel 12' ist die Axialbewegung zwischen der Spindelmutter 14' und dem Führungskörper 30'', in dem die spirallinienförmig verlaufende Führungsrille 31'' ausgebildet ist, durchaus erwünscht. Je nachdem, ob die Axialbewegung zwischen der Spindelmutter 14' und dem Führungskörper 30'' gleich oder gegenläufig ist, ist bei einer gleichläufigen Drehbewegung von Spindelmutter 14' und Führungskörper 30'' ein die Steigungen der beiden Elemente 14' und 30'' summierendes Getriebe und damit ein Getriebe mit einer verhältnismäßig hohen Steigung erhalten, während bei einer gegenläufigen Drehbewegung zwischen der Spindelmutter 14' und dem Führungskörper 30'' ein die Steigungen voneinander subtrahierendes Getriebe mit einer entsprechenden niedrigen Steigung geschaffen ist.

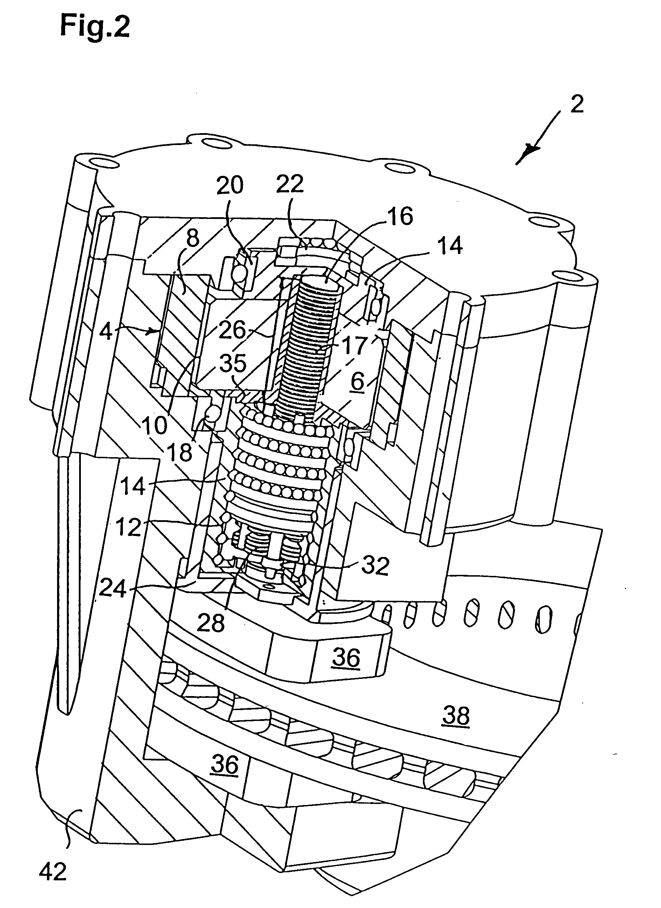

In Fig.2 ist ein in seiner Gesamtheit mit 2 bezeichneter, teilweise aufgeschnittener Bremsaktor 2 dargestellt, wobei im oberen Teil von Fig.2 ein Elektromotor 4 und im unteren Teil ein Bremsbelag in Form eines Reibbelags 36 wiedergegeben sind. Der Elektromotor 4 weist einen Läufer 6 und einen Ständer 8 sowie dazwischen einen Luftspalt 10 auf. Der Elektromotor 4 steht über die steigungstreue Planeten-Wälz-Gewinde-(SPWG-)Spindel 12 mit einem an einem Bremskolben 24 befestigten Bremsbelag 36 in Wirkverbindung. Aus Gründen der Bauraumersparnis ist bei der Ausführungsform in Fig.2 die Spindelmutter 14 über eine mit ihr fest verbundene Spindelabdeckung 35 angetrieben und nicht die Spindelstange 16. Die Spindelabdeckung 35 ist wiederum drehfest mit dem Läufer 6 des Motors 4 verbunden.

Die Achse der Spindelabdeckung 35 ist in der in Fig.2 dargestellten Ausführungsform gleichzeitig die Achse des Elektromotors 4. Die Spindelmutter 14 und somit auch der Läufer 6 des Elektromotors sind an ihrem motorseitigem Ende mittels eines Lagers 18 abgestützt, welches in Fig.2 als ein Schrägkugellager ausgebildet ist. Die mit dem Läufer 6 drehfest verbundene Abdeckung 35 ist mit einem Gegenflansch 40 fest verbunden. Der Gegenflansch 40 wiederum ist mittels eines Radiallagers 20 und eines Axiallagers (Drucklagers) 22 abgestützt, welches in der bevorzugten Ausführungsform der Fig.2 als Axial-Rollenlager ausgeführt ist. Die Abstützung ist erforderlich, da die gesamten, über die Spindelabdeckung 35 übertragenen Axialkräfte abgestützt werden müssen.

Der Bremsaktor 2 mit der in Fig.2 wiedergegebenen Ausführungsform funktioniert folgendermaßen: Der Elektromotor 4 treibt über die Spindelabdeckung 35 die Spindelmutter 14 an. Dadurch wird die drehfeste Spindelstange 16 zusammen mit dem am Bremskolben 24 befestigten Bremsbelag vorgetrieben und gegen die Bremsscheibe 38 gepreßt oder er wird von dieser aus zurückgefahren.

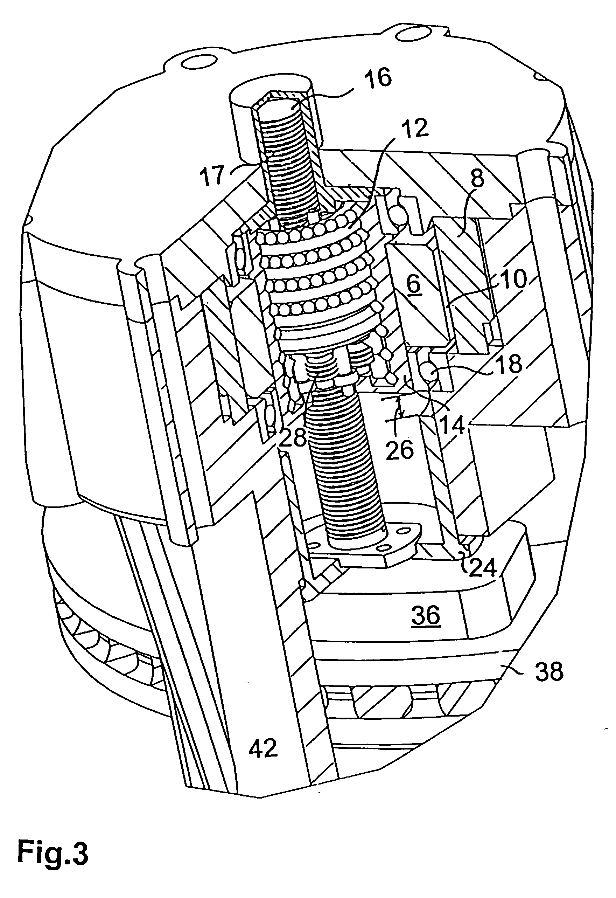

Der am Bremsbelag 36 auftretende Verschleiß kann durch Nachstellen des Bremskolbens 24 mit dem an ihm befestigten Reibbelag 36 gegenüber der Spindelmutter 14 um einen in Fig.2 durch einen beidseitig mit Spitzen versehenen Pfeil angegebenen Nachstellweg 26 nachgestellt werden; der Nachstellweg 26 liegt bei der Ausführungsform der Fig.3 in der Größenordnung von etwa 37mm. Der Hub des Bremskolbens 24 und damit des an dem Bremskolben befestigten Reibbelags 36 kann je nach Stärke der Betätigung und nach Steifigkeit des Bremssattels 42 in der Ausführungsform der Fig.2 bis zu 2mm betragen.

Die in der Fig.3 dargestellte, erste alternative Ausführungsform des erfindungsgemäßen Antriebs für einen Bremsaktor 2 weist einen mit einem Bremsbelag (Reibbelag) 36 verbundenen Elektromotor 4 auf. Der Elektromotor 4, der einen Läufer 6 und einen Ständer 8 und dazwischen einen Luftspalt 10 aufweist, steht ebenfalls über eine steigungstreue Planeten-Wälz-Gewinde-(SPWG-)Spindel 12 mit dem Bremsbelag 36 in Wirkverbindung.

In der ersten alternativen Ausführungsform ist jedoch aus Gründen der Bauraumersparnis die Spindelmutter 14 ebenfalls innerhalb des Läufers 6 angeordnet und mit diesem drehfest verbunden. Auch in der ersten alternativen Ausführungsform ist wiederum die Spindelmutter 14 angetrieben und nicht die Spindelstange 16. Die Achse der Spindelmutter 14 ist hier gleichzeitig die Achse des Elektromotors 4.

Die Spindelmutter 14 und somit auch der Läufer 6 des Elektromotors 4 sind an ihrem bremsbelagseitigen Ende mittels eines Radiallagers 18, welches ein Schrägkugellager ist, und an ihrem entgegengesetzten Ende mittels eines weiteren Radiallagers 20 abgestützt, welches ebenfalls ein Schrägkugellager ist (Die Axialkräfte können allerdings auch über ein zusätzliches Axiallager wie in Fig.2 abgestützt werden). Diese Abstützung ist erforderlich, da die gesamten, über die Spindelmutter 14 übertragenen Axialkräfte abgestützt werden müssen.

Die Funktionsweise der ersten alternativen Ausführungsform eines Antriebs des Bremsaktors 2 entspricht der Funktionsweise des anhand von Fig.2 und 2 beschriebenen Antriebs des Bremsaktors. Auch der auftretende Verschleiß des Bremsbelags 36 kann ebenfalls wiederum um etwa 37mm nachgestellt werden und auch der Hub des Bremskolben 24 kann je nach Stärke oder Betätigung und Steifigkeit des Bremssattels 42 bis zu 2mm betragen. Die SPWG-Spindel 12 ist genauso ausgeführt wie anhand der Fig.2 und 2 beschrieben ist. Ebenso wird eine in die Spindelstange 16 eingeleitete Kraft von dem ein- oder mehrgängigen Spindelstangen-Feingewinde 17 auf abschnittsweise ausgebildete Rillenprofile 29 mehrerer Roll- oder Wälzkörper 28 übertragen.

Ferner können analog der anhand von Fig.2 und 2 beschriebenen Ausführungsform zwischen den Führungsringen 30 bzw. dem Führungskörper 30' und der Spindelmutter 14 in Umfangsrichtung auftretende Kräfte oder Drehmomente übertragen werden. Auch die Kontaktlagerung der Roll- oder Wälzkörper sowie das Einhalten eines konstanten Abstands der Roll- oder Wälzkörper 28 zueinander erfolgt auf dieselbe Weise wie in Verbindung mit der Ausführungsform der Fig.2 und 2 beschrieben ist.

Aufgrund des Vorsehens der Führungsringe 30 bzw. des Führungskörpers 30' sowie der Kugel- oder Rollenlager 32 und 32' kann auch hier zwischen dem Spindelstangen-Feingewinde 17 und den Führungsrillen 29' der Roll- oder Wälzkörper 28 kein Schlupf auftreten. Ebenso sind, wie bei der ersten, anhand von Fig.2 und 2 beschriebenen Ausführungsform durch Schlupf bedingte oder aus anderen Gründen auftretende Steigungsfehler ausgeschlossen.

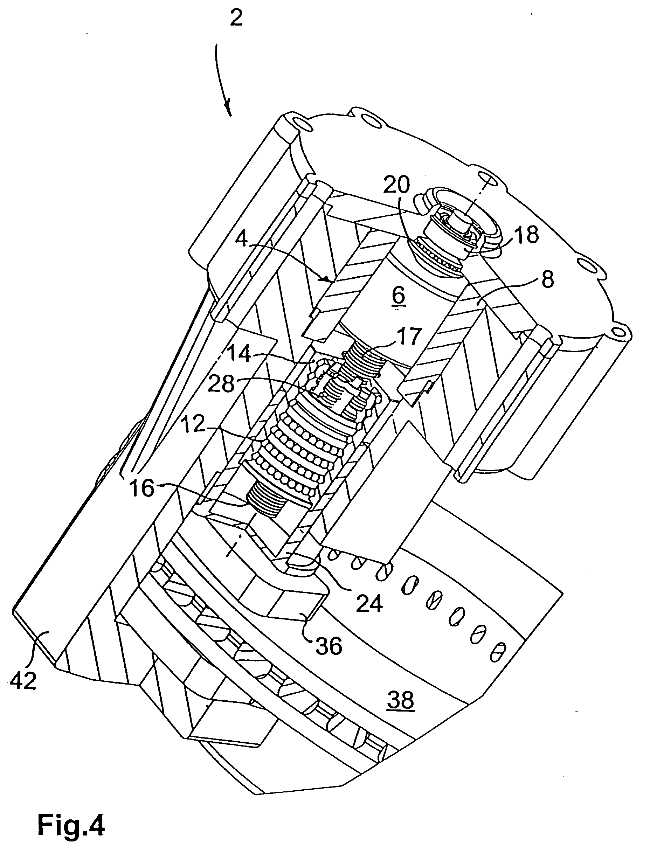

Die in Fig.4 dargestellte, zweite alternative Ausführungsform des erfindungsgemäßen Antriebs des Bremsaktors 2 unterscheidet sich von der anhand von Fig.3 beschriebenen, ersten alternativen Ausführungsform dadurch, daß in der zweiten alternativen Ausführungsform aus Gründen der Verringerung der rotatorisch bewegten Massen die Spindelstange 16 innerhalb des Läufers 6 angeordnet und mit diesem drehfest verbunden ist. In der zweiten alternativen Ausführungsform wird daher die Spindelstange 16 und nicht die Spindelmutter 14 angetrieben.

Ferner ist in der zweiten alternativen Ausführung die Achse der Spindelstange 16 gleichzeitig die Achse des Elektromotors 4. Statt der Spindelmutter 14 in der ersten alternativen Ausführungsform wird in der zweiten alternativen Ausführungsform die Spindelstange 16 und somit auch der Läufer 6 des Elektromotors an ihrem einen Ende mittels eines Radiallagers 18, beispielsweise in Form eines Kugellagers, und mittels eines Axiallagers 20 abgestützt, das beispielsweise ein Kegelrollenlager ist. Auch diese Abstützung ist wiederum erforderlich, da die gesamten über die Spiegelstange 16 übertragenen Axialkräfte abgestützt werden müssen.

Die Funktionsweise des Bremsaktors 2 mit dem Antrieb gemäß der zweiten alternativen Ausführungsform ist folgende: Der Elektromotor 4 treibt diesmal die Spindelstange 16 an, wodurch die drehfeste Spindelmutter 14 und der am Bremskolben 24 befestigte Bremsbelag 36 vorgetrieben und gegen die Bremsscheibe 38 gepreßt oder von dieser aus zurückgefahren wird.

Im Unterschied zu der ersten alternativen Ausführungsform wird der auftretende Verschleiß des Bremsbelags 36 durch Nachstellen des Bremskolbens 24 mit dem daran befestigten Reibbelag 36 gegenüber der Spindelstange 16 um einen ebenfalls in der Größenordnung von etwa 37mm liegenden Nachstellweg nachgestellt.

Da die SPWG-Spindel 12 genauso aufgebaut ist wie bei den vorstehend beschriebenen Ausführungsformen wird auch die in die Spindelstange 16 eingeleitete Kraft auf dieselbe Weise auf abschnittsweise ausgebildete Rillenprofile mehrerer Roll- oder Wälzkörper 28 übertragen. Da auch die Führungsringe 30 bzw. der Führungskörper 30' in analoger Weise gelagert sind, können ebenfalls keine in Umfangsrichtung auftretende Kräfte oder Drehmomente übertragen werden. Genauso kann zwischen dem Feingewinde 17 der Spindelstange 16 und den Führungsrillen 29' der Roll- oder Wälzkörper 28 kein Schlupf auftreten und es sind auch durch Schlupf bedingte Steigungsfehler ausgeschlossen.

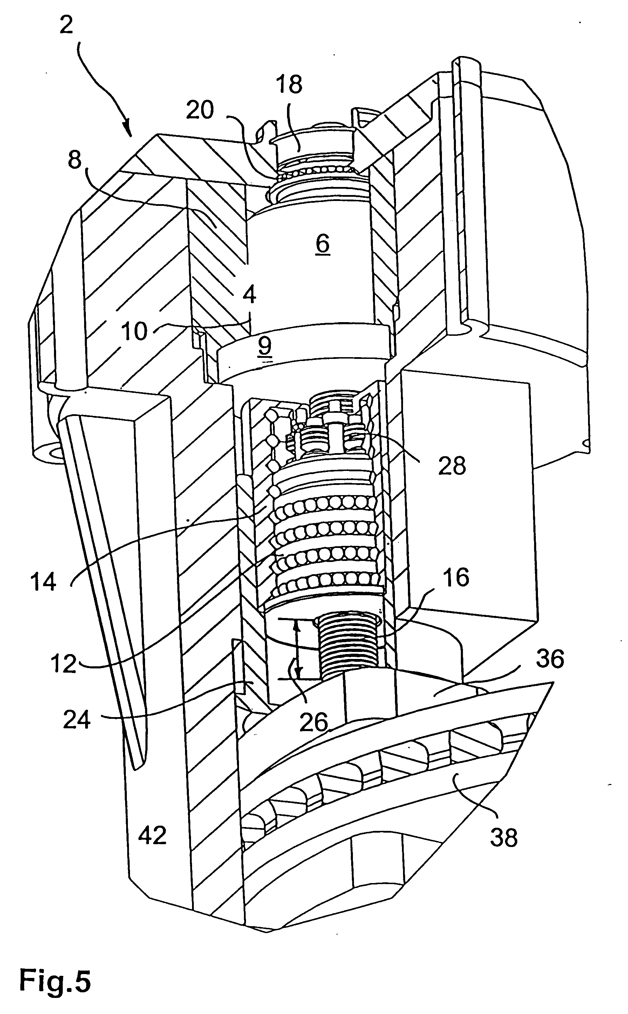

In der in Fig.5 dargestellten, dritten alternativen Ausführungsform wird im Unterschied zu der anhand von Fig.4 beschriebenen, zweiten alternativen Ausführungsform aus Gründen der Verbesserung des Wirkungsgrades die Drehbewegung des Elektromotors 4 durch ein Getriebe 9 in eine Drehbewegung geringer Drehzahl untersetzt. In der dritten alternativen Ausführungsform nach Fig.5 ist die Spindelstange 16 über das Getriebe 9 angetrieben und nicht die Spindelmutter 14. Hierbei ist die Achse der Antriebswelle des Getriebes 9 gleichzeitig die Achse des Elektromotors. Von den vorstehend angeführten Unterschieden abgesehen, entspricht die dritte alternative Ausführungsform der anhand von Fig.4 beschriebenen zweiten alternativen Ausführungsform.

In der Funktionsweise unterscheidet sich ein gemäß der dritten alternativen Ausführungsform ausgelegter Antriebs für den Bremsaktor 2 dadurch, daß der Elektromotor 4 das Getriebe 9 antreibt und dieses die Drehbewegung des Elektromotors 4 untersetzt. Ferner ist der Abtrieb des Getriebes 9 drehfest mit der Spindelstange 16 verbunden. Dadurch wird auch in der dritten alternativen Ausführungsform die drehfeste Spindelmutter zusammen mit dem am Bremskolben 24 befestigten Bremsbelag 36 vorgetrieben und gegen die Bremsscheibe gepreßt oder von dieser zurückgefahren. Auftretender Verschleiß am Bremsbelag wird auf dieselbe Weise nachgestellt, wie anhand der vorstehenden Ausführungsformen beschrieben ist. Der Aufbau der SPWG-Spindel 12 und deren Funktionsweise sind genau dieselben wie vorstehend anhand der ersten alternativen Ausführungsform ausführlich dargelegt ist.

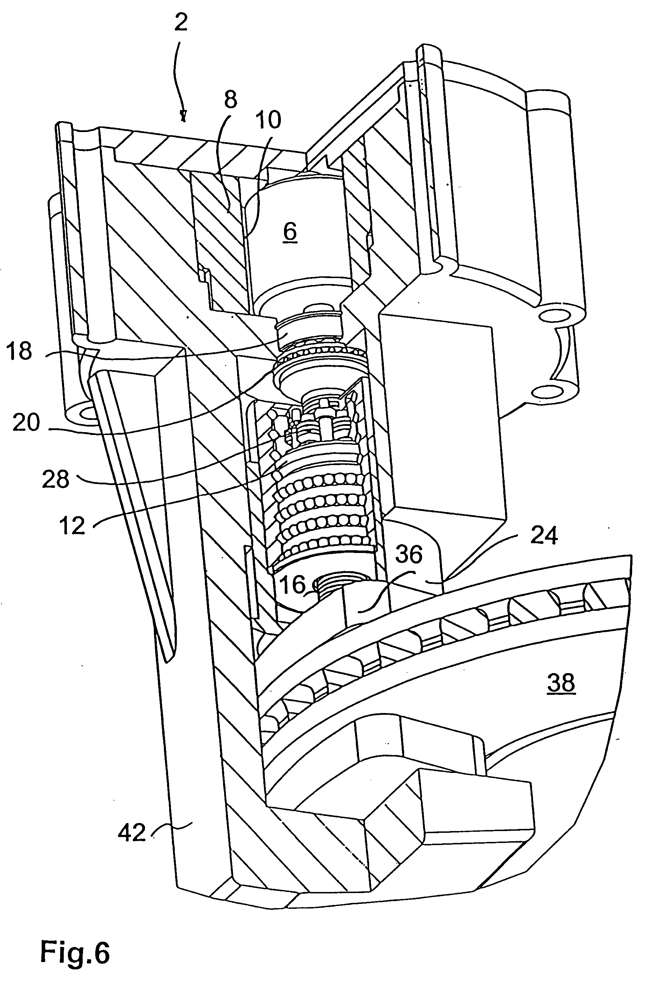

In der in Fig.6 dargestellten, vierten alternativen Ausführungsform ist ebenfalls wie bei der der anhand von Fig.4 beschriebenen, zweiten alternativen Ausführungsform aus Gründen der Verringerung der rotorisch bewegten Massen die Spindelstange 16 innerhalb des Läufers 6 angeordnet und mit diesem drehfest verbunden. Auch in der vierten alternativen Ausführungsform wird die Spindelstange 16 und nicht die Spindelmutter 14 angetrieben.

Ebenso ist die Achse der Spindelstange 16 auch wiederum gleichzeitig die Achse des Elektromotors 4. Die Spindelstange 16 und somit auch der Läufer des Elektromotors 4 sind zwischen der Spindel 12 und dem Elektromotor 4 mit einem Radiallager 18, beispielsweise in Form eines Kugellagers und mit einem Axiallager 20 abgestützt, welches auch in der vierten alternativen Ausführungsform ein Kugelrollenlager ist. Die Abstützung ist ebenfalls wieder erforderlich, da die gesamten über die Spindelstange 16 übertragenen Axialkräfte abgestützt werden müssen.

Im übrigen ist die Funktionsweise der vierten alternativen Ausführungsform dieselbe, wie sie beispielsweise anhand der zweiten alternativen Ausführungsform beschrieben ist. Ebenso ist der Aufbau der SPWG-Spindel 12 derselbe, wie in den vorstehend beschriebenen Ausführungsformen. Ferner wird auch auftretender Verschleiß am Bremsbelag auf die gleiche Weise und in demselben Umfang nachgestellt.

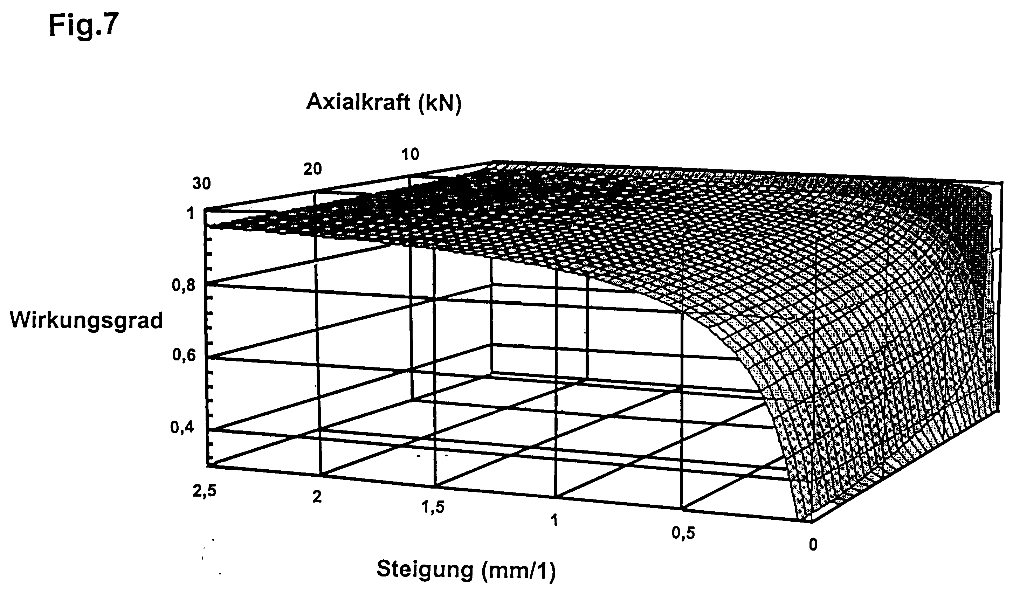

In Fig.7 sind in einer dreidimensionalen Graphik auf der vom Nullpunkt in Fig.7 schräg nach links verlaufenden Achse die Steigung in mm pro Umdrehung auf der vom Nullpunkt in Fig.7 ausgehenden schräg nach rechts und senkrecht zur Steigungsachse verlaufenen Achse die Axialkraft in kN und auf der in Fig. 7 vertikal verlaufenden Achse der Wirkungsgrad aufgetragen. Wie der Graphik von Fig.7 zu entnehmen ist, wird bei einer Steigung von 2,5mm pro Umdrehung ein Wirkungsgrad von etwa 0,96 erreicht.

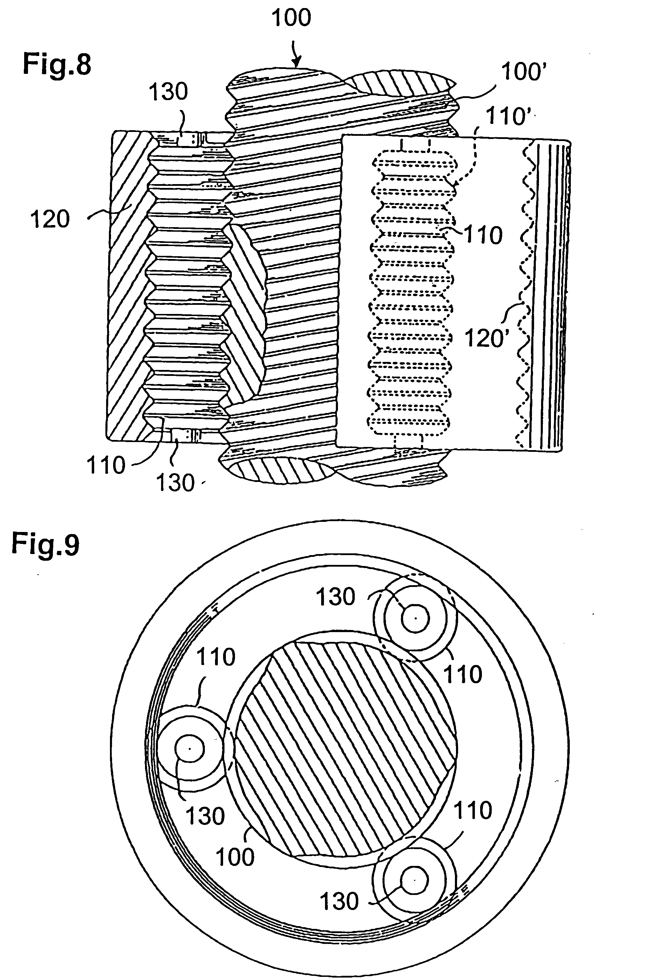

In Fig.8 und 9 hat eine Spindelstange 100 drei Gewindegänge mit einem spitzen Winkel von 90°. Drei Roll- oder Wälzkörper 110 weisen über ihre ganze Länge ringförmige Zähne 110' auf. Die ringförmigen Zähne 110' der Roll- oder Wälzkörper 110 haben die gleiche axiale Teilung wie das Gewinde 100' der Spindelstange 100 , und die Form der Zähne 110' der Roll- oder Wälzkörper 110 entspricht der Form der Gewindegänge 100'.

Eine zylindrische Spindelmutter 120 weist in einer Bohrung eine Vielzahl von inneren Ringnuten 120' auf, welche über die ganze Länge der Spindelmutter 120 angeordnet sind. Die Ringnuten 120' der Spindelmutter 120 haben die gleiche axiale Teilung wie die ringförmigen Zähne 110 der Roll- oder Wälzkörper 110 und eine Form, welche zu derjenigen der ringförmigen Zähne 110' der Roll- oder Wälzkörper 110 komplementär ist. Die Spindelmutter 120 hat die gleiche Anzahl von Ringnuten 120' wie die Zahl der Zähne 110' jedes Roll- oder Wälzkörpers 110.

Obwohl jeder Roll- oder Wälzkörper an jedem Ende einen kurzen Drehzapfen 130 aufweist, sind diese für den Betrieb des Schraubspindeltriebs nicht unbedingt erforderlich und sie sind lediglich vorgesehen, um die Rollen 110 in die in Fig.9 wiedergegebene Stellung beim Zusammenbau zu bringen. Der in Fig.8 und 9 dargestellte Schraubspindelantrieb ist in sehr vielen Fällen anwendbar, bei welchen eine Drehbewegung in eine lineare bzw. axiale Bewegung umzuwandeln ist und umgekehrt.

Entsprechend der in Fig.5 dargestellten dritten alternativen Ausführungsform bei welcher die SPWG-Spindel verwendet ist, kann aus Gründen der Verbesserung des Wirkungsgrades die Drehbewegung eines Elektromotors auch bei Verwenden des aus DE 27 18 888 C2 bekannten Spindeltriebs durch ein in der Wirkung dem Getriebe 9 in Fig.5 entsprechendes Getriebe in eine Drehbewegung geringer Drehzahl untersetzt werden. Auch in diesem Fall wird analog der Ausführungsform nach Fig.5 die Spindelstange 100 über das Getriebe angetrieben. Hierbei ist dann ebenfalls die Achse der Antriebswelle des Getriebes gleichzeitig die Achse des Elektromotors. Im übrigen gelten dieselben Überlegungen die hinsichtlich der Funktionsweise der dritten in Fig.5 dargestellten Ausführungsform angeführt sind.

### Bezugszeichenliste:

- 2: Bremsaktor
- 4: Elektromotor
- 6: Läufer
- 8: Ständer
- 9: Getriebe
- 10: Luftspalt
- 12: Gewinde-(SPWG-)Spindel
- 14: Spindelmutter
- 16: Spindelstange
- 17: Feingewinde
- 18: Lager
- 20: Radiallager
- 22: Axiallager
- 24: Bremskolben
- 26: Nachstellweg
- 28: Roll- oder Wälzkörper
- 29: Rillenprofil
- 29': Führungsrillen
- 30: Führungsringe
- 30': Führungskörper
- 32: Rollenlager
- 32': Kugel- oder Rollenlager
- 33: Zapfen
- 34: Buchsen
- 35: Spindelabdeckung
- 36: Reibbelag (Bremsbelag)
- 38: Bremsscheibe
- 40: Gegenflansch
- 42: Bremssattel

## Patentansprüche

1. Antrieb für eine elektrisch betätigbare Fahrzeugbremse, deren Reibelemente mit Hilfe eines Elektromotors (4) an eine Bremsscheibe (38) anpreßbar sind, wobei der Elektromotor (4) über ein in Verschieberichtung der Reibelemente wirkendes Spindelgetriebe mit Axialführung und Verdrehsicherung mit einem auf die Reibelemente einwirkenden, axial verschiebbar gelagerten Bremskolben (24) verbunden ist, **dadurch gekennzeichnet**, daß
als Spindelgetriebe eine an sich bekannte steigungstreue Planeten-Wälz-Gewinde-(SPWG-)Spindel (12) verwendet ist, welche besteht aus
einer Spindelstange (16), einer diese umgebenden Spindelmutter (14) und einer Anzahl dazwischen angeordneter Wälz- oder Rollkörper (28) mit zum Gewinde (17) der Spindelstange (16) passenden Rillenprofilen (29), wobei die Wälz- oder Rollkörper (28) über eine Anzahl wälzgelagerter Führungsringe (30) oder über einen Führungskörper (30') axial und über zwischen den Roll- oder Wälzkörpern (28) angeordnete Lager (32) zumindest in Umfangsrichtung gelagert sind, und die Wälz- oder Rollkörper (28) dadurch relativ zur Spindelmutter (14) und zueinander in einem fest vorgegebenen Abstand angeordnet sind.

2. Antrieb nach Anspruch 1, **dadurch gekennzeichnet**, daß die Achse der Spindelmutter (14) gleichzeitig Achse des Elektromotors (4) ist und im Inneren des Läufers (6) des Elektromotors (4) angeordnet ist.

3. Antrieb nach einem der Ansprüche 1 oder 2, **dadurch gekennzeichnet**, daß dem Läufer (6) des Elektromotors (4) ein Getriebe (9) nachgeordnet ist.

4. Antrieb nach einem der vorhergehenden Ansprüche, **gekennzeichnet durch** ein in die Spindelmutter (14) integriertes Kugel- oder Wälzlager, durch welches die Führungsringe (30) oder der Führungskörper (30') bezüglich der Spindelmutter (14) gelagert sind bzw. ist.

5. Antrieb nach einem der Ansprüche 1 bis 3, **gekennzeichnet durch** ein in die Spindelmutter (14) integriertes, nach dem Kugelumlaufprinzip arbeitendes Spindelgetriebe.

6. Antrieb nach Anspruch 5, **dadurch gekennzeichnet**, daß zwischen den Führungsringen (30) bzw. dem Führungskörper (30') und der Spindelmutter (14) eine Kugelumlaufspindel vorgesehen ist.

7. Antrieb nach einem der vorhergehenden Ansprüche, **dadurch gekennzeichnet**, daß die Flanken der Wälz- oder Rollkörper (28) und/oder die Flanken des Feingewindes der Spindelstange (16) mit einer Balligkeit versehen sind.

8. Antrieb für eine elektrisch betätigbare Fahrzeugbremse, deren Reibelemente mit Hilfe eines Elektromotors (4) an eine Bremsscheibe (38) anpreßbar sind, wobei der Elektromotor (4) über ein in Verschieberichtung der Reibelemente wirkendes Spindelgetriebe mit Axialführung und Verdrehsicherung mit einem auf die Reibelemente einwirkenden, axial verschiebbar gelagerten Bremskolben (24) verbunden ist, **dadurch gekennzeichnet**, daß
als Spindelgetriebe ein an sich bekannter Schraubspindeltrieb verwendet ist, welcher aus einer Spindelstange (100) mit einem mehrgängigen, mindestens dreigängigen Gewinde (100'), einer diese umgebende Spindelmutter (120) und einer Anzahl von dazwischen angeordneten, ringförmig verlaufende Zähne (110') aufweisenden Roll- oder Wälzkörper (110) besteht, wobei die Anzahl der Roll- oder Wälzkörper (110) gleich der Anzahl der Gewindegänge (100') der Gewindestange (100) ist und die ringförmig verlaufenden Zähne (110') der Roll- oder Wälzkörper (110) gleichzeitig in das Gewinde (100') der Spindelstange (100) und die Ringnuten (120') der Spindelmutter (120) eingreifen.

9. Antrieb für eine elektrisch betätigbare Fahrzeugbremse, deren Reibelemente mit Hilfe eines Elektromotors (4) an eine Bremsscheibe (38) anpreßbar sind, wobei der Elektromotor (4) über ein in Verschieberichtung der Reibelemente wirkendes Spindelgetriebe mit Axialführung und Verdrehsicherung mit einem auf die Reibelemente einwirkenden, axial verschiebbar gelagerten Bremskolben (24) verbunden ist, **dadurch gekennzeichnet**, daß
als Spindelgetriebe ein an sich bekannter Schraubspindeltrieb verwendet ist, welcher besteht aus
einer ringförmig Profilierungen aufweisenden Spindelstange, einer diese umgebenden Spindelmutter mit mehrgängigem, mindestens dreigängigem Gewinde und einer Anzahl dazwischen angeordneter, ringförmig verlaufende Zähne aufweisende Roll- oder Wälzkörper (110), wobei die Anzahl der Roll- oder Wälzkörper (110) gleich der Anzahl der Gewindegänge der Spindelmutter ist und ringförmig verlaufende Zähne (110') der Roll- oder Wälzkörper (110) gleichzeitig in das mehrgängige Gewinde der Spindelmutter und die ringförmig verlaufenden Profilierungen der Spindelstange eingreifen.

10. Antrieb nach Anspruch 9 oder 10, **dadurch gekennzeichnet**, daß die Anzahl der Gewindegänge ein Vielfaches der Anzahl der Roll- oder Wälzkörper beträgt.
